# EUROPÄISCHE PATENTSCHRIFT

(11) **EP 1 788 295 B1**
(45) Veröffentlichungstag und Bekanntmachung des Hinweises auf die Patenterteilung: **11.08.2010**
(21) Anmeldenummer: 06124210.3
(22) Anmeldetag: 16.11.2006
(51) Int. Cl.: F16L 37/12, F16L 23/036, F16L 21/08

(54) **Anschlussarmatur einer Prüfeinrichtung für mit Schlaucharmaturen konfektionierte Schlauchleitungen**
Connection fitting for connecting a testing device to a hose fitting of a flexible conduit
Dispositif de raccordement pour raccorder un dispositif de test à un embout de tuyau flexible

(30) Priorität: 18.11.2005 DE 202005018060 U
(43) Veröffentlichungstag der Anmeldung: 23.05.2007
(73) Patentinhaber: Dipl.-Ing. H. Schulz HDS Hydraulik GmbH & Co. KG, 51647 Gummersbach (DE)
(72) Erfinder: Siemens, Kornelius, 51647 Gummersbach (DE)
(74) Vertreter: Patentanwälte Dr. Solf & Zapf

(56) Entgegenhaltungen:
- EP-A- 0 764 807
- EP-A- 0 921 342
- DE-A1- 3 047 867
- DE-A1- 3 444 930
- DE-A1- 10 154 840
- US-A- 5 749 606

## Beschreibung

Die vorliegende Erfindung betrifft eine Anschlussarmatur für mit Schlaucharmaturen, insbesondere mit Flanschbauteilen, konfektionierte Schlauchleitungen nach dem Oberbegriff des Anspruchs 1 und eine Verbindung zur Verwendung in einer Prüfvorrichtung, bestehend aus einer derartigen Anschlussarmatur und aus Schlaucharmatur, nach dem Oberbegriff des Anspruchs 6.

Schläuche und Schlauchleitungen, insbesondere Hydraulikschlauchleitungen, werden unter anderem in hydraulischen Anlagen verschiedener Industriebereiche eingesetzt. Um für den vorgesehenen Einsatz eine Zuverlässige sicherheitstechnische Beurteilungs- und Vergleichsbasis zu schaffen, sind die Hersteller gehaiten, zu sicherheitsrelevanten Eigenschaften, dem Ausfall- und Alterungsverhalten sowie zum Verhalten gegenüber Umgebungseinflüssen geeignete Daten zu erheben. So sind insbesondere in den Normen "Gummi- und Kunststoffschläuche und -schlauchleitungen - Hydrostatische Prüfung" (ISO 1402:2001) und "Schläuche und Schlauchleitungen, Prüfungen" (DIN 20024) Anforderungen an die Druckbelastbarkeit, u. a. von Hochdruckleitungen, festgelegt, wobei für die in der letztgenannten Norm aufgeführten Prüfverfahren inzwischen die internationalen Normen des ISO/TC 45 in das Deutsche Normenwerk übernommen wurden und verbindlich sind.

Hierbei sind Anschlussarmaturen der eingangs genannten Art bekannt, die z. B. in Druck-Prüfbänken Verwendung finden und es gestatten, einen zu prüfenden Schlauch oder eine zu prüfende Schlauchleitung - mitsamt einer daran befindlichen Schlaucharmatur, insbesondere eines Flanschbauteils - an die entsprechende Prüfvorrichtung anzuschließen und danach mit dem Prüfmittel unter dem vorgesehenen Druck zu beaufschlagen. Je nach Verwendungszweck der Leitungen besitzen die entsprechenden, eine Druckmittelleitung umfassenden Flanschbauteile, die insbesondere einen Flanschansatz und einen sich daran axial anschließenden Flansch aufweisen können, unterschiedliche Abmessungen, z. B. unterschiedliche Innen- und Außendurchmesser des Flanschansatzes oder Dicken sowie Innen- und Außendurchmesser des Flansches. Dieser Tatsache Rechnung tragend sind in den bekannten Armaturen eine Vielzahl von gegeneinander auswechselbaren Prüfköpfe gebräuchlich, die in Anpassung an die Geometrie des jeweiligen Flanschbauteiles an der zu prüfenden Leitung ausgelegt sind, wobei in der Verbindung Anschlussarmatur/Flanschbauteil eine innenabdichtung, d. h. die Anordnung einer Dichtung im Inneren der Druckmittelleitung des Flanschbauteiles erfolgt. Mit der Verwendung der auswechselbaren Prüfköpfe ist sowohl ein hoher apparativer, als such montagetechnischer, d. h. die Rüstzeiten der Prüfbänke negativ beeinflussender, Aufwand verbunden.

Aus der US-A-5 749 606 sind eine Armatur und eine Verbindung der eingangs genannten Art bekannt. Das Dokument bezieht sich dabei auf eine Verbinderanordnung für fluidführende Leitungen in Kraftfahrzeugen. Zu dieser Anordnung gehören einerseits ein speziell gestaltetes Kopfteil ("male member"), bei dem es sich um einen Steckzapfen handelt und das einen geraden Bereich mit einem freien Ende und einen radial auswärts verlaufenden konischen Bereich aufweist, sowie andererseits eine Zuleitung ("female member bore"), in die das Kopfteil einsteckbar ist. In der Zuleitung kann ein O-Ring angeordnet sein, dessen Wirkung jedoch durch das Bestreben eines Betriebsdruckes, das eingesteckte Kopfteil in axialer Richtung aus der Zuleitung herauszuschieben, gemindert oder ganz aufgehoben werden kann.

Der vorliegenden Erfindung liegt die Aufgabe zu Grunde, eine Anschlussarmatur und eine Verbindung der eingangs genannten Art derart zu verbessern, dass sie bei unbeeinträchtigter Funktionserfüllung einen universellen Einsatz zur Prüfung von mit Schlaucharmaturen ausgestatteten Rohrleitungen und dabei eine geringe zur Druckprüfung notwendige Zeit gewährleistet,

Diese Aufgabe wird mit einer Anschlussarmatur gemäß dem Anspruch 1 und mit einer Verbindung gemäß dem Anspruch 6 gelöst.

Durch die Erfindung wird einerseits eine hohe Druckdichtheit der erfindungsgemäßen Verbindung, die aus der erfindungsgemäßen Anschlussanmatur und aus dem zu prüfenden Schlauch oder der zu prüfenden Schlauchleitung mit der Schlaucharmatur besteht, erreicht, andererseits gestattet es die Erfindung, einen Prüfkopf der Prüfvorrichtung zu schaffen, der als Universal-Prüfkopf bezeichnet werden kann, weil ein und derselbe Kopf bei einer Vielzahl von Flanschbauteilen mit unterschiedlichen geometrischen Abmessungen, wie Innen- und Außendurchmesser des Flanschansatzes oder Dicke sowie Innen- und Außendurchmesser des Flansches, einsetzbar ist. Damit entfallen sämtliche Montagearbeiten, wie sie bekanntermaßen zur Umrüstung einer Prüfbank für eine Schlauchleitung mit neuem, anderem Flanschbauteil notwendig waren.

In bevorzugter Ausführung kann dabei insbesondere vorgesehen sein, dass die Dichtung, z. B. ein elastisch deformierbarer klassischer O-Ring mit geeigneter Schnurstärke und Shore-Härte, in einer Umfangsnut in der inneren Umfangsfläche des Aufnahmeraumes des Prüfkopfes angeordnet ist. Dies gestattet bei leichter Einsteckbarkeit des zu prüfenden Objekts eine wirksame Abdichtung - auch bei einem Außendurchmesser des Flansches, der toleranz- oder normbedingt von dem des vorhergehend geprüften Objekts abweicht. Dabei ist wegen der einfachen Zugänglichkeit auch eine leichte Auswechselbarkeit für die Dichtung gegeben.

Zur sicheren, aber apparativ wenig aufwändigen Halterung der Schlaucharmatur einer zu prüfenden Leitung können dem Prüfkopf bevorzugt zwei im Querschnitt U-förmige Befestigungshalbschalen zugeordnet sein, die im Montagezustand den Prüfkopf und den daran befindlichen Flanschansatz der Armatur formschlüssig umfassen, wobei wiederum den Befestigungshalbschalen eine ringförmige, beispielsweise aufschraubbare, Arretierhülse zugeordnet ist, die die Befestigungshalbschalen form- und - zumindest im Betriebszustand - kraft-, vorzugsweise reibschlüssig, umfasst.

Weitere vorteilhafte Ausführungen der Erfindung sind in den Unteransprüchen und der nachfolgenden speziellen Beschreibung enthalten.

Anhand des in den Zeichnungen dargestellten Ausführungsbeispiels wird die Erfindung näher erläutert. Es zeigen:
- Fig. 1: einen axialen Schnitt durch eine erfindungsgemäße Anschlussarmatur einer Prüfvorrichtung für Schläuche und Schlauchleitungen,
- Fig. 2a bis 2d: ebenfalls axial geschnitten, unterschiedliche Ausführungen von Flanschbauteilen, die sich an einem zu prüfenden Schlauch oder einer zu prüfenden Schlauchleitung befinden können und in gleichartiger Weise mit der erfindungsgemäßen Anschlussarmatur gemäß Fig. 1 verbindbar sind,
- Fig. 3: in einer Ansicht aus radialer Richtung, vergrößert gegenüber Fig. 1, zwei erfindungsgemäß dem Prüfkopf bevorzugt zugeordnete Befestigungshalbschalen,
- Fig. 4: einen axialen Schnitt durch eine Verbindung einer erfindungsgemäßen Anschlussarmatur und einer zu prüfenden Schlauchleitung.

In den Zeichnungsfiguren sind gleiche und einander entsprechende Teile stets mit den gleichen Bezugszeichen versehen, so dass sie in der Regel auch nur einmal beschrieben werden.

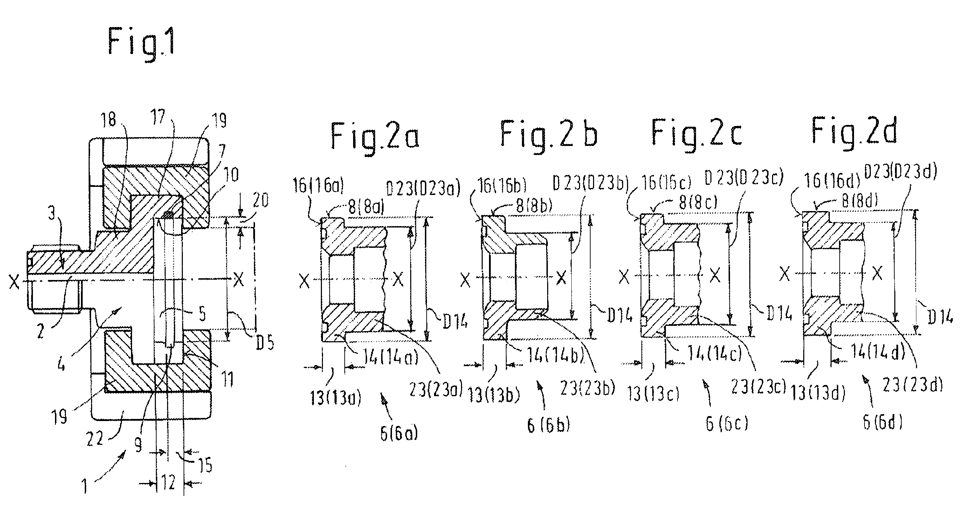

Wie aus Fig. 1 hervorgeht, weist eine Anschlussarmatur 1 einer - an sich bekannten und daher nicht dargestellten - Prüfvorrichtung für konfektionierte Schlauchleitungen einen eine Prüfmittel-Zuleitung 2 umgebenden Anschlussstutzen 3 für die Prüfvorrichtung und einen Prüfkopf 4 auf, der einen sich axial an die Prüfmittel-Zuleitung anschließenden Aufnahmeraum 5 zur abgedichteten Aufnahme einer an einem zu prüfenden Schlauch oder einer zu prüfenden Schlauchleitung befindlichen Schlaucharmatur 6 aufweist.

Als Beispiel für eine derartige Schlaucharmatur 6 sind in Fig. 2a bis 2d Flanschbauteile 6 dargestellt und generell mit dem Bezugszeichen 6 sowie entsprechend ihrer unterschiedlichen geometrischen Ausbildung zusätzlich mit den in Klammern gesetzten Bezugszeichen 6a bis 6d bezeichnet. Die Flanschbauteile 6 können sukzessiv ohne bauliche Veränderungen am Prüfkopf 4 und ohne zusätzliche Montageschritte in der erfindungsgemäßen Armatur geprüft werden.

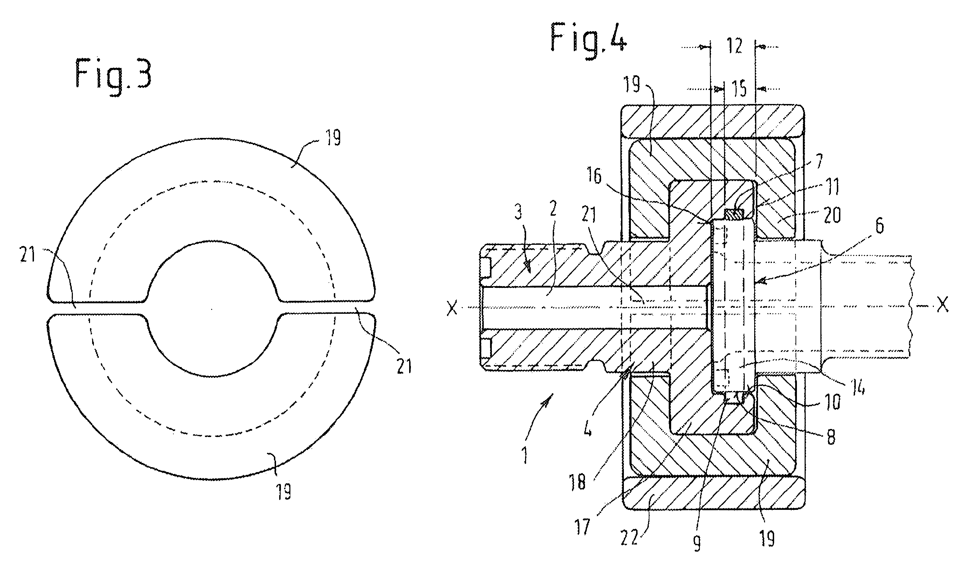

Zur abgedichteten Aufnahme des Flanschbauteils 6 ist eine - jeweils in Fig. 1 und 4 nur in der oberen Hälfte der Figuren gezeigte - Dichtung 7 vorgesehen, die derart ausgebildet und angeordnet ist, dass sie das Flanschbauteil 6 im Montage- und im Betriebszustand an seiner äußeren Umfangsfläche 8, die entsprechend ihrer möglichen unterschiedlichen geometrischen Ausbildung wiederum in Fig. 2a bis 2d zusätzlich mit den in Klammern gesetzten Bezugszeichen 8a bis 8d bezeichnet ist, außenseitig dichtend umfasst, wie dies insbesondere Fig. 4 entnommen werden kann.

Bevorzugt ist die Dichtung 7 dabei als eine O-Ring-Dichtung ausgeführt, die in einer Umfangsnut 9 in der inneren Umfangsfläche 10 des Aufnahmeraumes 5 des Prüfkopfes 4 angeordnet ist.

Aus Fig. 1 und 4 ist des Weiteren zu entnehmen, dass in der dargestellten bevorzugten Ausführung der Aufnahmeraum 5 ausgehend von einer Stirnseite 11 des Prüfkopfes 4 eine axiale Tiefe 12 aufweist, die entsprechend einer axialen Höhe 13 eines Flansches 14 an dem in dem Aufnahmeraum aufzunehmendem Flanschbauteil 6 dimensioniert ist und insbesondere größer oder gleich der Höhe des Flansches 13 ist. Entsprechend ihrer unterschiedlichen Ausführung sind der Flansch 14 und dessen Höhe 13 wiederum in Fig. 2a bis 2d zusätzlich mit den in Klammern gesetzten Bezugszeichen 14a bis 14d und 13a bis 13d bezeichnet.

Hierzu ist es - insbesondere für kleinere Flanschhöhen 13 - von Vorteil, wenn die Umfangsnut 9 ausgehend von der Stirnseite 11 des Prüfkopfes 4 in einer axialen Tiefenposition 15 angeordnet ist, die sich in der ersten Hälfte, vorzugsweise im ersten Drittel der Tiefe 12 des Aufnahmeraumes 5 befindet.

Ein im Betriebszustand vorliegender Druck hat nämlich das Bestreben, ein in den Aufnahmeraum eingestecktes Flanschbauteil 6 in axialer Richtung X-X aus dem Aufnahmeraum 5 herauszuschieben. Dies kann soweit zugelassen werden, bis der im Aufnahmeraum 4 aufgenommene Flansch 14 des Flanschbauteils 6 auf seiner der Anschlussarmatur 1 abgewandten Seite bündig mit der Stirnseite 11 der Anschlussarmatur 1 abschließt. Auch bei vorhandener geringer Höhe 13 des Flansches 14 bewirkt dann die Dichtung 7 bei der entsprechenden Tiefenposition 15 der Umfangsnut 9 eine wirksame Abdichtung der Verbindung, wobei eine der Anschlussarmatur 1 zugewandte Stirnseite 16 - bzw. entsprechend der unterschiedlichen Ausführung 16a bis 16c - des Flansches 14 des Flanschbauteils 6 im Betriebszustand ausgehend von der Stirnseite 11 des Prüfkopfes 4 in der axialen Tiefenposition 15 angeordnet ist, die sich in der zweiten Hälfte, zumindest aber in einem zweiten Drittel der axialen Tiefe 12 des Aufnahmeraumes 5 befindet.

Sowohl Flanschbauteile 6d mit größerer Flanschdicke 13d, wie bei der Ausführung in Fig. 2d, als auch Flanschbauteile 6a, 6b, 6c mit geringerer Flanschdicke 13a, 13b, 13c, wie bei den Ausführungen in Fig. 2a bis 2c, können somit in der Verbindung mit der erfindungsgemäßen Anschlussarmatur 1 unter funktionssicherer Abdichtung aufgenommen werden.

Hierbei ist es - wenngleich gewisse Toleranzen durch die Wahl einer entsprechenden Schnurstärke der Dichtung 7 ausgeglichen werden können - im Sinne der Ausbildung einer hochdruckdichten Verbindung von Vorteil, wenn der Flansch 14 des Flanschbauteils 6 im Montagezustand - im Querschnitt gesehen - formschlüssig in den Aufnahmeraum 5 des Prüfkopfes 4 eingepaßt ist, was beispielsweise durch einen entsprechenden Innendurchmesser D5 des Aufnahmeraumes 5 und entsprechende Außendurchmesser D14 des Flansches 14 zum Ausdruck kommen kann.

Wie zeichnerisch in Fig. 1 und 4 dargestellt ist, ist es von Vorteil, wenn der Prüfkopf 4 der erfindungsgemäßen Anschlussarmatur 1 einen Kopfflansch 17 und einen Kopfansatz 18 aufweist, an dem sich der Anschlussstutzen 3 für die Prüfvorrichtung befindet. Dies gestattet es, dem Prüfkopf 4 zwei im Querschnitt, insbesondere im Radialschnitt, U-förmige - separat in Fig. 3 dargestellte - Befestigungshalbschalen 19 zuzuordnen, die im Montagezustand den Prüfkopf 4, insbesondere dessen Kopfflansch 17 und Kopfansatz 18, formschlüssig umfassen. Die Befestigungshalbschalen 19 können dabei insbesondere jeweils einen Überstand 20 aufweisen, der den Aufnahmeraum 5 randseitig überdeckt. Der im Aufnahmeraum 5 aufgenommene Flansch 14 des Flanschbauteils 6 wird dadurch im Montagezustand auf seiner der Anschlussarmatur 1 abgewandten Seite durch den Überstand 20 ebenfalls randseitig überdeckt und damit formschlüssig im Aufnahmeraum 5 gegen eine axiale Bewegung nach außen arretiert.

Den Befestigungshalbschalen 19, die in montagetechnisch einfacher Weise unter Ausbildung zweier Längsschlitze 21 auf den Prüfkopf 4 beidseitig aufgelegt werden können, kann - wie bereits erwähnt - mit Vorteil eine ringförmige, beispielsweise aufschraubbare, Arretierhülse 22 zugeordnet sein, die die Befestigungshalbschalen 19 form- und - zumindest im Betriebszustand - kraft-, vorzugsweise reibschlüssig, umfasst und damit die unter Verwendung der Befestigungshalbschalen 19 ausgebildete Verbindung zwischen der erfindungsgemäßen Armatur 1 und dem Flanschbauteil 6 an dem zu prüfenden Schlauch bzw. an der zu prüfenden Schlauchleitung sichert.

Bei den in Fig. 2a bis 2d dargestellten Flanschbauteilen 6a bis 6d befindet sich jeweils der schon erwähnte Flansch 14a bis 14d an einem Flanschansatz 23, der individuell mit 23a bis 23d bezeichnet ist und an den er sich jeweils in axialer Richtung X-X anschließt. Auch der jeweilige Flanschansatz 23 kann ohne Einbuße an Funktionssicherheit und ohne erhöhten montagetechnischen Aufwand unterschiedliche Abmessungen aufweisen, insbesondere unterschiedliche Innen- und - wie dargestellt - Außendurchmesser D23 - individuell mit D23a bis D23d bezeichnet - oder Dicken (nicht bezeichnet). So weist beispielsweise die in Fig. 2b dargestellte Ausführung 6b des Flanschbauteils 6 einen signifikant kleineren Außendurchmesser D23b auf, als die Außendurchmesser D23a, D23c und D23d der übrigen Ausführungen 6a, 6c, 6d des Flanschbauteils 6.

Die Erfindung beschränkt sich nicht auf das beschriebene Ausführungsbeispiel, sondern umfasst auch alle im Sinne der Erfindung gleichwirkenden Ausführungen. So fällt es beispielsweise auch in den Rahmen der Erfindung, wenn der Aufnahmeraum 4 der erfindungsgemäßen Anschlussarmatur 1 keinen runden, sondern in Anpassung an einen entsprechenden Flansch 14 des Flanschbauteils 6 einen ovalen oder rechteckigen Querschnitt aufweist oder die Abdichtung an einer anderen als der dargestellten Stelle im Bereich des Flansches 14 des Flanschbauteiles 6 erfolgt.

### Bezugszeichen

- 1: Anschlussarmatur
- 2: Prüfmittel-Zuleitung von 1
- 3: Anschlussstutzen um 2 an 4
- 4: Prüfkopf von 1 an 3
- 5: Aufnahmeraum in 4 für 6
- 6: Schlaucharmatur, Flanschbauteil - individuell 6a bis 6d
- 7: Dichtung
- 8: Umfangsfläche von 6 (14) - individuell 8a bis 8d
- 9: Umfangsnut in 10
- 10: Umfangsfläche von 5
- 11: Stirnseite von 4
- 12: axiale Tiefe von 5, ausgehend von 11
- 13: axiale Höhe von 14 - individuell 13a bis 13d
- 14: Flansch von 6 an 23 - individuell 14a bis 14d
- 15: axiale Tiefenposition von 9 bzw. 16
- 16: Stirnseite von 6 - individuell 16a bis 16d
- 17: Kopfflansch von 4
- 18: Kopfansatz von 4
- 19: Befestigungshalbschale
- 20: Überstand von 19 über 5
- 21: Längsschlitz
- 22: Arretierhülse um 19
- 23: Flanschansatz von 6 an 14 - individuell 23a bis 23d
- D5: Innendurchmesser von 5
- D14: Außendurchmesser von 14
- D23: Außendurchmesser von 23 - individuell D23a bis D23b
- X-X: Längsachse von 1 (und 6)

## Patentansprüche

1. Anschlussarmatur (1) zur Herstellung einer Verbindung mit einer Schlaucharmatur (6) einer Schlauchleitung, mit einem eine Zuleitung (2) umgebenden Anschlussstutzen (3) und einem Kopf (4), der einen Kopfflansch (17) und einen Kopfansatz (18) sowie einen Aufnahmeraum (5) aufweist und in dem die Schlaucharmatur (6) mittels einer Dichtung (7) abgedichtet anschließbar ist, wobei die Dichtung (7) in einer Umfangsnut (9) angeordnet ist, welche sich in einer inneren Umfangsfläche (10) des Kopfes (4) befindet,
**dadurch gekennzeichnet, dass** die Zuleilung (2) als Prüfmittel-Zuleitung (2) und der Kopf (4) als Prüfkopf (4) für eine Prüfvorrichtung ausgebildet sind, wobei in dem Aufnahmeraum (5) als Schlaucharmatur (6) ein Flanschbauteil (6, 6a, 6b, 6c, 6d) aufnehmbar ist, welches einen Flansch (14, 14a, 14b, 14c, 14d) aufweist, der über eine axiale Höhe (13, 13a, 13b, 13c, 13d) hinweg einen Außendurchmesser (D14) aufweist, wodurch eine äußere Umfangsfläche (8, 8a, 8b, 8c, 8d) gebildet ist, die im Montagezustand außenseitig dichtend von der Dichtung (7) umfasst wird, wobei der Aufnahmeraum (5) ausgehend von einer Stirnseite (11) des Prüfkopfes (4) eine axiale Tiefe (12) aufweist, die größer oder gleich der Höhe (13, 13a, 13b, 13c, 13d) des Flansches (14, 14a, 14b, 14c, 14d) ist, und wobei die Umfangsnut (9) ausgehend von der Stirnseite (11) des Prüfkopfes (4) in einer axialen Tiefenposition (15) angeordnet ist, die sich in der ersten Hälfte der Tiefe (12) des Aufnahmeraumes (5) befindet, derart, dass, wenn das Flanschbauteil (6, 6a, 6b, 6c, 6d) durch einen im Betriebszustand vorliegenden Druck in axialer Richtung (X-X) aus dem Aufnahmeraum (5) herausgeschoben wird, bis der im Aufnahmeraum (5) aufgenommene Flansch (14, 14a, 14b. 14c, 14d ) des Flanschbauteils (6, 6a, 6b, 6c, 6d) auf seiner der Anschlussarmatur (1) abgewandten Seite bündig mit der Stirnseite (11) der Anschlussarmatur (1) abschließt, die Dichtung (7) eine wirksame Abdichtung bewirkt, und dass dem Kopfflansch (17) und dem Kopfansatz (18) des Prüfkopfes (4) zwei im Querschnitt U-förmigen und zur Anschlussarmatur (1) gehörende Befestigungshalbschalen (19) zugeordnet sind, die den Kopfflansch (17) und den Kopfansatz (18) im Montagezustand formschlüssig umfassen und die jeweils einen Überstand (20) ausweisen, der den Aufnahmeraum (5) und den im Aufnahmeraum (5) aufnehmbaren Flansch (14, 14a, 14b, 14c, 14d), auf seiner der Anschlussarmatur (1) abgewandten Seite randseitig überdeckt und den Flansch (14, 14a, 14b, 14c, 14d) damit formschlüssig im Aufnahmeraum (5) gegen eine axiale Bewegung nach außen arretiert.

2. Anschlussarmatur (1) nach Anspruch 1,
**dadurch gekennzeichnet, dass** die Dichtung (7) eine O-RingDichtung ist.

3. Anschlussarmatur (1) nach Anspruch 1 oder 2,
**dadurch gekennzeichnet, dass** den Befestigungshalbschalen (19) eine ringförmige Arretierhülse (22) zugeordnet ist, die die Befestigungshalbschalen (19) form- und - zumindest im Betriebszustand - kraftschlüssig umfasst.

4. Anschlussarmatur (1) nach Anspruch 3,
**dadurch gekennzeichnet, dass** die Arretierhülse (22) auf die Befestigungshalbschalen (19) aufschraubbar ist.

5. Anschlussarmatur (1) nach Anspruch 3 oder 4,
**dadurch gekennzeichnet, dass** die Arretierhülse (22) die Befestigungshalbschalen (19) reibschlüssig umfasst.

6. Verbindung zur Verwendung in einer Prüfvorrichtung, bestehend aus einer Anschlussarmatur (1) nach einem der Ansprüche 1 bis 5 und aus einer Schlaucharmatur (6) für eine Schlauchleitung.

## Claims

1. A connection fitting (1) for the production of a connection with a hose fitting (6) of a hose line, with a connecting branch (3) surrounding a feed line (2) and a head (4) which has a head flange (17) and a head projection (18) and also a receiving space (5) and in which the hose fitting (6) can be connected in sealed manner by means of a seal (7), the seal (7) being arranged in a peripheral groove (9) which is located in an inner peripheral surface (10) of the head (4),
**characterised in that** the feed line (2) is designed as a test-medium feed line (2) and the head as a test head (4) for a test device, with a flange component (6, 6a, 6b, 6c, 6d) being able to be received as hose fitting (6) in the receiving space (5), which component has a flange (14, 14a, 14b, 14c, 14d) which over an axial height (13, 13a, 13b, 13c, 13d) has an external diameter (D14) by means of which an external peripheral surface (8, 8a, 8b, 8c, 8d) is formed which in the assembled state is surrounded on the outside in sealing manner by the seal (7), the receiving space (5), starting from an end face (11) of the test head (4), having an axial depth (12) which is greater than or equal to the height (13, 13a, 13b, 13c, 13d) of the flange (14, 14a, 14b, 14c, 14d), and the peripheral groove (9), starting from the end face (11) of the test head (4), being arranged in an axial depth position (15) which is located in the first half of the depth (12) of the receiving space (5), such that if the flange component (6, 6a, 6b, 6c, 6d) is pushed out of the receiving space (5) in the axial direction (X-X) by a pressure present in the operating state until the flange (14, 14a, 14b, 14c, 14d) of the flange component (6, 6a, 6b, 6c, 6d) received in the receiving space (5), on its side remote from the connection fitting (1), closes off flush with the end face (11) of the connection fitting (1), the seal (7) brings about effective sealing, and **in that** two fastening half-shells (19) which are U-shaped in cross-section and belong to the connection fitting (1) are associated with the head flange (17) and the head projection (18) of the test head (4), which half-shells surround the head flange (17) and the head projection (18) in positive manner in the assembled state and which each have a projecting length (20) which covers the receiving space (5) and the flange (14, 14a, 14b, 14c, 14d) which can be received in the receiving space (5) on the edge on its side remote from the connection fitting (1) and thus blocks the flange (14, 14a, 14b, 14c, 14d) in positive manner in the receiving space (5) against axial movement outwards.

2. A connection fitting (1) according to Claim 1, **characterised in that** the seal (7) is an O-ring seal.

3. A connection fitting (1) according to Claim 1 or 2, **characterised in that** an annular blocking sleeve (22) is associated with the fastening half-shells (19), which sleeve surrounds the fastening half-shells (19) in positive and - at least in the operating state - in non-positive manner.

4. A connection fitting (1) according to Claim 3, **characterised in that** the blocking sleeve (22) can be screwed on to the fastening half-shells (19).

5. A connection fitting (1) according to Claim 3 or 4, **characterised in that** the blocking sleeve (22) surrounds the fastening half-shells (19) in a frictional connection.

6. A connection for use in a test device, consisting of a connection fitting (1) according to one of Claims 1 to 5 and of a hose fitting (6) for a hose line.

## Revendications

1. Dispositif de raccordement (1) destiné à la réalisation d'un raccordement avec un raccord pour flexible (6) d'une conduite en tuyaux flexibles, comportant une tubulure de raccordement (3), entourant une conduite d'alimentation (2), et une tête (4) qui est munie d'un collet (17) et d'une queue (18), ainsi que d'un logement (5), et dans lequel le raccord pour flexible (6) peut être raccordé de manière étanche au moyen d'un joint d'étanchéité (7), ledit joint d'étanchéité (7) étant posé dans une rainure périphérique (9) qui est située dans une surface périphérique intérieure (10) de la tête (4),
**caractérisé en ce que** la conduite d'alimentation (2) est réalisée sous la forme d'une conduite d'alimentation pour fluide d'essai (2) et la tête (4) est réalisée sous la forme d'une tête d'essai (4) pour un dispositif d'essai, sachant que dans le logement (5) peut être logé un élément à bride (6, 6a, 6b, 6c, 6d) en tant que raccord pour flexible (6), lequel comporte une bride (14, 14a, 14b, 14c, 14d) qui, au-delà d'une hauteur axiale (13, 13a, 13b, 13c, 13d), possède un diamètre extérieur (D14), moyennant quoi il se forme une surface périphérique extérieure (8, 8a, 8b, 8c, 8d) qui, dans la position de montage, est entourée de l'extérieur de manière étanche par le joint d'étanchéité (7), le logement (5) possédant, à partir d'une face frontale (11) de la tête d'essai (4), une profondeur axiale (12) qui est supérieure ou égale à la hauteur (13, 13a, 13b, 13c, 13d) de la bride (14, 14a, 14b, 14c, 14d), la rainure périphérique (9) étant disposée, à partir de la face frontale (11) de la tête d'essai (4), dans une position en profondeur axiale (15) qui se situe dans la première moitié de la profondeur (12) du logement (5), de telle sorte que le joint d'étanchéité (7) assure une étanchéité efficace lorsqu'une pression régnant en cours de service pousse l'élément à bride (6, 6a, 6b, 6c, 6d) hors du logement (5) dans la direction axiale (X-X), jusqu'à ce que la bride (14, 14a, 14b, 14c, 14d) de l'élément à bride (6, 6a, 6b, 6c, 6d), reçue dans le logement (5), soit située, sur son côté détourné du dispositif de raccordement (1), à fleur avec la face frontale (11) du dispositif de raccordement (1), et **en ce qu'**au collet (17) et à la queue (18) de la tête d'essai (4) sont associées deux demi-coquilles de fixation (19) avec une section en forme de U et faisant partie du dispositif de raccordement (1), lesquelles, dans la position de montage, entourent par conjugaison de forme le collet (17) et la queue (18) et lesquelles comportent chacune une saillie (20) qui recouvre, sur le bord sur le côté détourné du dispositif de raccordement (1), le logement (5) et la bride (14, 14a, 14b, 14c, 14d) apte à être reçue dans le logement (5), et qui bloque donc par conjugaison de forme la bride (14, 14a, 14b, 14c, 14d) dans le logement (5) contre tout mouvement axial vers l'extérieur.

2. Dispositif de raccordement (1) selon la revendication 1, **caractérisé en ce que** le joint d'étanchéité (7) est un joint torique.

3. Dispositif de raccordement (1) selon la revendication 1 ou 2, **caractérisé en ce qu'**aux demi-coquilles de fixation (19) est associé un manchon de blocage (22) annulaire qui entoure les demi-coquilles de fixation (19) par conjugaison de forme et - au moins dans la position de service - par application de force.

4. Dispositif de raccordement (1) selon la revendication 3, **caractérisé en ce que** le manchon de blocage (22) peut être vissé sur les demi-coquilles de fixation (19).

5. Dispositif de raccordement (1) selon la revendication 3 ou 4, **caractérisé en ce que** le manchon de blocage (22) entoure par l'application d'une friction les demi-coquilles de fixation (19).

6. Raccordement destiné à être utilisé dans un dispositif d'essai, formé par un dispositif de raccordement (1) selon l'une quelconque des revendications 1 à 5 et par un raccord pour flexible (6) pour une conduite en tuyaux flexibles.
